# EUROPEAN PATENT APPLICATION

(11) **EP 4 316 943 A1**
(43) Date of publication of application: **07.02.2024**
(21) Application number: 22781042.1
(22) Date of filing: 30.03.2022
(51) Int. Cl.: B61H 5/00, F16D 65/12, F16D 65/847

(54) **BRAKE DISC**

(30) Priority: 01.04.2021 JP 2021062857; 28.09.2021 JP 2021158347; 28.09.2021 JP 2021158348
(71) Applicant: NIPPON STEEL CORPORATION, Chiyoda-ku Tokyo 100-8071 (JP)
(72) Inventor: OKAMOTO, Mitsuhiro, Tokyo 100-8071 (JP); NOGAMI, Hiroshi, Tokyo 100-8071 (JP); FUJIMOTO, Takahiro, Tokyo 100-8071 (JP); ICHIKAWA, Yuki, Tokyo 100-8071 (JP); MIYABE, Naruo, Tokyo 100-8071 (JP); KATO, Takanori, Tokyo 100-8071 (JP)
(74) Representative: Zimmermann & Partner Patentanwälte mbB
(86) International application number: PCT/JP2022/015815
(87) International publication number: WO 2022/210831

(57) **Abstract**

A brake disc (100) includes a disc body (10) and a plurality of fins (20). The plurality of fins (20) are disposed on one surface (12) of the disc body (10) such that each of the fins (20) extends from an inner peripheral side toward an outer peripheral side of the disc body (10). Each of the fins (20) includes two side surfaces (221, 222) and a top surface (21). Among the plurality of fins (20), at least one fin (20) includes a plurality of protruding ridge portions (25). The plurality of protruding ridge portions (25) are arranged in a radial direction of the disc body (10) on at least one side surface of the two side surfaces (221, 222) of the fin (20). Each of the protruding ridge portions (25) extends between the disc body (10) and the top surface (21) of the fin (20).

## Description

### TECHNICAL FIELD

The present disclosure relates to a brake disc for a railway vehicle.

### BACKGROUND ART

For a braking device of a railway vehicle, a disc brake device is widely used. The disc brake device includes a brake disc and a brake lining. The brake disc is fastened to a wheel, for example, and rotates together with the wheel. The brake lining is pushed against the brake disc. The railway vehicle is braked by the friction generated between the brake lining and the brake disc.

The brake disc includes, for example, a disc body having an annular plate shape and a plurality of fins. The plurality of fins are radially arranged on one surface of the disc body. These fins ensure cooling performance of the brake disc. More specifically, by fastening the brake disc to the wheel with the fins facing the wheel, air passages are formed by the wheel, the disc body, and the adjacent fins. The air passages allow air to pass therethrough from the inner peripheral side toward the outer peripheral side of the disc body when the brake disc rotates together with the wheel. Thus, the brake disc is cooled.

As described above, air flows through the air passages defined by the wheel, the disc body, and the adjacent fins, thus cooling the brake disc. However, aerodynamic noise is generated by air flowing through the air passages. Particularly, in the case in which a railway vehicle travels at a high speed, the flow rate of ventilation in the air passages increases, so that large aerodynamic noise is generated. A brake disc for a railway vehicle is also required to reduce aerodynamic noise in addition to ensuring cooling performance.

Patent Literature 1, for example, discloses a brake disc that reduces aerodynamic noise during high speed travel and that improves cooling performance during braking. In the brake disc of Patent Literature 1, some fins each have a fastening hole for inserting a fastening member. Each of these fins has a groove in a region on the outer peripheral side of the fastening hole and/or has a groove in a region on the inner peripheral side of the fastening hole, each groove extending along the circumferential direction of the disc body. According to Patent Literature 1, the corner portions and the wall surfaces of such grooves cause the pressure loss of air flowing through the air passages defined by the wheel, the disc body, and the fins. Therefore, the flow rate of ventilation in the air passages reduces and, as a result, it is possible to reduce aerodynamic noise during high speed travel. Further, according to Patent Literature 1, with the grooves of each fin, pressure-loss portions, having a high coefficient of heat transfer with air, are formed across a wide portion of the brake disc and hence, it is possible to improve cooling performance during braking.

### CITATION LIST

### PATENT LITERATURE

Patent Literature 1: WO 2014/038621

### SUMMARY OF INVENTION

### TECHNICAL PROBLEM

As also described in Patent Literature 1, in the brake disc for a railway vehicle, there is a strong correlation between the flow rate of ventilation in the air passages and the level of aerodynamic noise. That is, aerodynamic noise increases together with an increase in the flow rate of ventilation in the air passages, and aerodynamic noise reduces together with a decrease in the flow rate of ventilation in the air passages. To reduce aerodynamic noise generated during the travel of the railway vehicle, the flow rate of ventilation in the air passages should be restricted. However, in the case in which an attempt to reduce aerodynamic noise is made by restricting the flow rate of ventilation, usually, cooling performance of the brake disc is lowered.

It is an object of the present disclosure to provide a brake disc for a railway vehicle that can reduce aerodynamic noise while ensuring cooling performance.

### SOLUTION TO PROBLEM

A brake disc according to the present disclosure is a brake disc for a railway vehicle. The brake disc includes a disc body and a plurality of fins. The disc body has an annular plate shape. The plurality of fins are disposed on one surface of the disc body such that each of the fins extends from an inner peripheral side toward an outer peripheral side of the disc body. The plurality of fins each include two side surfaces and a top surface, the two side surfaces being arranged in a circumferential direction of the disc body, the top surface connecting the two side surfaces with each other. Among the plurality of fins, at least one fin includes a plurality of protruding ridge portions. The plurality of protruding ridge portions are arranged in a radial direction of the disc body on at least one side surface of the two side surfaces of the fin. Each of the protruding ridge portions extends between the disc body and the top surface of the fin.

### ADVANTAGEOUS EFFECTS OF INVENTION

According to the brake disc for a railway vehicle according to the present disclosure, aerodynamic noise can be reduced while cooling performance is ensured.

### BRIEF DESCRIPTION OF DRAWINGS

[FIG. 1] FIG. 1 is a back view of a brake disc for a railway vehicle according to a first embodiment.
[FIG. 2] FIG. 2 is a partial perspective view of the brake disc shown in FIG. 1.
[FIG. 3] FIG. 3 is a III-III cross-sectional view of the brake disc shown in FIG. 1.
[FIG. 4] FIG. 4 is a IV-IV cross-sectional view of the brake disc shown in FIG. 1.
[FIG. 5] FIG. 5 is a back view of a brake disc for a railway vehicle according to a second embodiment.
[FIG. 6] FIG. 6 is a back view of a brake disc for a railway vehicle according to a third embodiment.
[FIG. 7] FIG. 7 is a back view of a brake disc for a railway vehicle according to a fourth embodiment.
[FIG. 8] FIG. 8 is a back view of a brake disc for a railway vehicle according to a fifth embodiment.
[FIG. 9] FIG. 9 is a back view of a brake disc for a railway vehicle according to a sixth embodiment.
[FIG. 10] FIG. 10 is a back view of a brake disc for a railway vehicle according to a seventh embodiment.
[FIG. 11] FIG. 11 is a back view of a brake disc for a railway vehicle according to an eighth embodiment.
[FIG. 12] FIG. 12 is a partial perspective view of the brake disc shown in FIG. 11.
[FIG. 13] FIG. 13 is a partially enlarged view of the rear surface of the brake disc shown in FIG. 11.
[FIG. 14] FIG. 14 is a graph showing evaluation results of an analysis on brake discs according to respective examples and a Comparative Example.
[FIG. 15] FIG. 15 is a diagram showing results of a rotation test that uses models of the brake discs according to the examples and the Comparative Example.

### DESCRIPTION OF EMBODIMENTS

A brake disc according to an embodiment is a brake disc for a railway vehicle. The brake disc includes a disc body and a plurality of fins. The disc body has an annular plate shape. The plurality of fins are disposed on one surface of the disc body such that each of the fins extends from an inner peripheral side toward an outer peripheral side of the disc body. The plurality of fins each include two side surfaces and a top surface, the two side surfaces being arranged in a circumferential direction of the disc body, the top surface connecting the two side surfaces with each other. Among the plurality of fins, at least one fin includes a plurality of protruding ridge portions. The plurality of protruding ridge portions are arranged in a radial direction of the disc body on at least one side surface of the two side surfaces of the fin. Each of the protruding ridge portions extends between the disc body and the top surface of the fin (first configuration).

In the brake disc according to the first configuration, among the plurality of fins disposed on the one surface of the disc body, one or more fins are provided with the plurality of protruding ridge portions on the side surface. When the brake disc is mounted on the rotary member, such as the wheel, so that an air passage is formed by the rotary member, the disc body, and the fins adjacent to each other, these protruding ridge portions can reduce the cross-sectional area of the air passage in the circumferential direction of the disc body. Thus, it is possible to restrict the flow rate of air that passes through the air passage (the flow rate of ventilation) during the travel of the railway vehicle. Hence, aerodynamic noise can be reduced.

In the brake disc according to the first configuration, the plurality of protruding ridge portions provided to the side surface of a fin can also increase the surface area of the brake disc. Further, during the travel of the railway vehicle, air flows into an air passage from the inner peripheral side of the disc body and then flows along the side surface of the fin. Accordingly, by providing the plurality of protruding ridge portions on the side surface of the fin, it is possible to increase a coefficient of heat transfer between the brake disc and air. As a result, it is possible to improve cooling performance of the brake disc during braking. Accordingly, with the brake disc according to the first configuration, aerodynamic noise can be reduced by efficiently restricting the flow rate of ventilation in the air passage while cooling performance is ensured.

In the brake disc according to the embodiment, each of the plurality of fins may further include an inner peripheral surface. The inner peripheral surface of each of the fins is coupled to inner end portions of the top surface and the two side surfaces in the radial direction of the disc body. It is preferable that the plurality of protruding ridge portions be disposed outward of the inner peripheral surface of each of the fins in the radial direction of the disc body (second configuration).

In the second configuration, the plurality of protruding ridge portions are located outward of the inner peripheral surface of each fin in the radial direction of the disc body. Therefore, in each of the plurality of fins, corner portions are ensured between the inner peripheral surface and both side surfaces. With these corner portions, it is possible to efficiently cause air to enter air passages each formed between the fins adjacent to each other, and it is possible to maintain a high coefficient of local heat transfer in such a region. Hence, it is possible to ensure cooling performance of the brake disc.

In the brake disc according to the embodiment, in the at least one fin of the plurality of fins, the plurality of protruding ridge portions may be provided to each of the two side surfaces (third configuration).

According to the third configuration, the plurality of protruding ridge portions are provided to both side surfaces of the fin. In this case, it is possible to further increase effects of reducing aerodynamic noise and of improving cooling performance.

In the brake disc according to the embodiment, each of the plurality of fins may include the plurality of protruding ridge portions (fourth configuration).

According to the fourth configuration, the plurality of protruding ridge portions are provided to the side surface of all of the fins. In this case, it is possible to further increase effects of reducing aerodynamic noise and of improving cooling performance.

The plurality of protruding ridge portions may include at least one first protruding ridge portion and at least one second protruding ridge portion. The second protruding ridge portion is disposed at a position different from a position of the first protruding ridge portion in the radial direction of the disc body. A length of the first protruding ridge portion in the circumferential direction of the disc body is greater than a length of the second protruding ridge portion in the circumferential direction (fifth configuration).

According to the fifth configuration, the first protruding ridge portion and the second protruding ridge portion are provided to the side surface of the fin. In the circumferential direction of the disc body, the length of the first protruding ridge portion is greater than the length of the second protruding ridge portion. In this case, the cross-sectional area of the air passage can be reduced particularly at the position of the first protruding ridge portion and hence, it is possible to effectively restrict the flow rate of ventilation in the air passage. Hence, aerodynamic noise can be further reduced.

Further, by providing, to the side surface of the fin, the first protruding ridge portion having a relatively large length in the circumferential direction of the disc body, it is possible to further increase the surface area of the brake disc. Therefore, it is possible to improve cooling performance of the brake disc during braking. Hence, it is possible to restrict the flow rate of ventilation in the air passage more efficiently while ensuring cooling performance.

Among the plurality of fins, each of fins adjacent to each other in the circumferential direction of the disc body may include the first protruding ridge portion and the second protruding ridge portion. In this case, the first protruding ridge portion of one of the fins adjacent to each other faces, in the circumferential direction, the first protruding ridge portion of the other of the fins adjacent to each other (sixth configuration).

The first protruding ridge portion may be disposed close to the outer peripheral side of the disc body (seventh configuration). The first protruding ridge portion may be disposed close to the inner peripheral side of the disc body (eighth configuration). The first protruding ridge portion may be disposed at a center portion in the radial direction of the disc body (ninth configuration).

In the brake disc according to the embodiment, among the plurality of fins, each of fins adjacent to each other in the circumferential direction of the disc body may include the plurality of protruding ridge portions. The plurality of protruding ridge portions may include at least one first protruding ridge portion. In order to bend an air passage formed between the fins adjacent to each other, the first protruding ridge portion of one of the fins adjacent to each other may be disposed at a position displaced in the radial direction from a position of the first protruding ridge portion of the other of the fins adjacent to each other (tenth configuration).

In the tenth configuration, among the plurality of fins disposed on the one surface of the disc body, the plurality of protruding ridge portions are provided to each side surface of the fins adjacent to each other. When the brake disc is mounted on the rotary member, such as the wheel, so that the air passage is formed by the rotary member, the disc body, and the fins adjacent to each other, these protruding ridge portions can reduce the cross-sectional area of the air passage in the circumferential direction of the disc body. Therefore, it is possible to restrict the flow rate of air that passes through the air passage (the flow rate of ventilation) during the travel of the railway vehicle. Further, the plurality of protruding ridge portions include the first protruding ridge portion. The positions of the first protruding ridge portions of the fins adjacent to each other are displaced from each other in the radial direction of the disc body, so that the air passage formed between the fins adjacent to each other is bent. By bending the air passage as described above, it is possible to increase flow resistance against air that passes through the air passage. Hence, it is possible to effectively reduce aerodynamic noise.

In the tenth configuration, the plurality of protruding ridge portions provided to the side surfaces of the fins can also increase the surface area of the brake disc. Further, during the travel of the railway vehicle, air that flows into the air passage from the inner peripheral side of the disc body tends to flow along the side surfaces of the fins. Accordingly, by providing the first protruding ridge portions to the side surfaces of the fins to bend the air passage, thus increasing the length of the passage, it is possible to cause air flowing through the air passage to sufficiently come into contact with the rear surface of the disc body and the side surfaces of the fins. Further, a bent portion of the air passage suddenly changes the direction of the flow of air and hence, it is possible to increase a coefficient of heat transfer between the brake disc and air at the bent portion. As a result, it is possible to improve cooling performance of the brake disc during braking. Accordingly, aerodynamic noise can be reduced by efficiently restricting the flow rate of ventilation in the air passage while cooling performance is ensured.

In the brake disc according to the tenth configuration, the plurality of protruding ridge portions may further include a second protruding ridge portion. The second protruding ridge portion is disposed at a position different from a position of the first protruding ridge portion in the radial direction of the disc body. A length of the first protruding ridge portion in the circumferential direction of the disc body is greater than a length of the second protruding ridge portion in the circumferential direction (eleventh configuration).

The first protruding ridge portion of one of the fins adjacent to each other may face, in the circumferential direction of the disc body, the second protruding ridge portion of the other of the fins adjacent to each other, with a gap formed between the first protruding ridge portion and the second protruding ridge portion. The second protruding ridge portion of the one of the fins adjacent to each other may face, in the circumferential direction of the disc body, the first protruding ridge portion of the other of the fins adjacent to each other, with a gap formed between the second protruding ridge portion and the first protruding ridge portion (twelfth configuration).

According to the twelfth configuration, the first protruding ridge portion having a relatively large length in the circumferential direction of the disc body faces the second protruding ridge portion having a relatively small length in the circumferential direction of the disc body with a gap formed therebetween. In this case, the cross-sectional area of the air passage can be reduced particularly at the position at which the first protruding ridge portion faces the second protruding ridge portion and hence, it is possible to effectively restrict the flow rate of ventilation in the air passage. Hence, it is possible to efficiently reduce aerodynamic noise.

In the brake disc according to the embodiment, among the plurality of fins, one or more fins may include a groove that crosses through the fin (thirteenth configuration).

According to the thirteenth configuration, at least a fin includes the groove that crosses through the fin itself. This groove causes the pressure loss of air flowing through an air passage, thus decreasing the flow rate of ventilation in the air passage and raising a coefficient of heat transfer between the brake disc and air. By providing the groove to the fin, it is also possible to increase the surface area of the fin. Therefore, according to the thirteenth configuration, aerodynamic noise can be further reduced, and cooling performance can be further improved.

In the brake disc according to the embodiment, among the plurality of fins, one or more fins may include a fastening hole for inserting a fastening member. The groove may be disposed, in the one or more fins including the fastening hole, at least at one of a portion outward of the fastening hole in the radial direction of the disc body and a portion inward of the fastening hole in the radial direction of the disc body (fourteenth configuration). It is preferable that the groove be disposed, in the one or more fins including the fastening hole, at each of the portion outward of the fastening hole in the radial direction of the disc body and the portion inward of the fastening hole in the radial direction of the disc body (fifteenth configuration).

According to the fourteenth configuration or the fifteenth configuration, the groove is formed on the fin including the fastening hole, thus allowing thermal expansion and contraction of the fin in the radial direction of the disc body. Hence, during braking of a railway vehicle, restraints on the fins against thermal expansion are relaxed and hence, deformation caused with the thermal expansion of the brake disc is reduced. As a result, a stress load on the fastening member inserted into the fastening hole and on the brake disc can be reduced and hence, it is possible to improve durability of the brake disc.

Hereinafter, brake discs according to embodiments of the present disclosure will be described with reference to drawings. In the respective drawings, identical or corresponding components are given the same reference symbols, and the same description will not be repeated. The respective drawings are schematic diagrams for illustrating main components of the brake disc according to the embodiment. Therefore, the detailed shape, the dimension ratio, and the like of the brake disc shown in the respective drawings may differ from those of an actual brake disc.

### <First embodiment>

### [Configuration of brake disc]

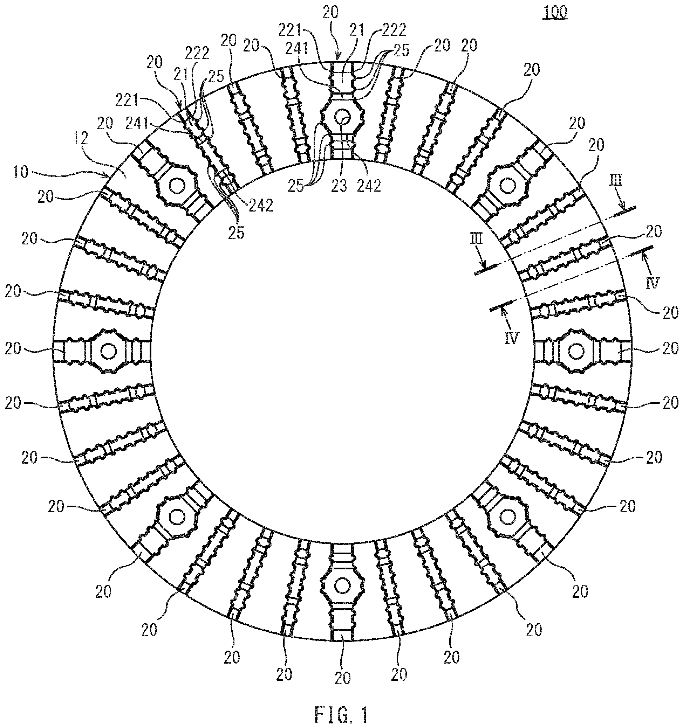

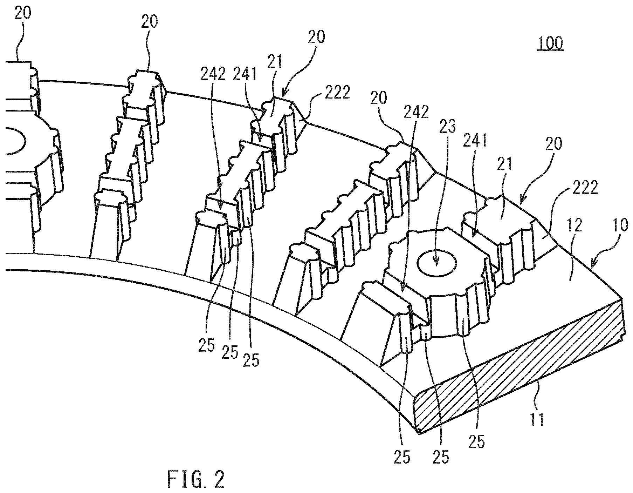

FIG. 1 is a back view of a brake disc 100 for a railway vehicle according to a first embodiment. FIG. 2 is a partial perspective view of the brake disc 100 shown in FIG. 1. The brake disc 100 is fastened to the rotary member (not shown in the drawing) of a railway vehicle. The rotary member is an annular disc, and is fixed to the axle of the railway vehicle to rotate together with the axle. The rotary member may be a wheel, for example. The brake disc 100 is typically made of steel, and may be shaped by forging, for example.

Referring to FIG. 1 and FIG. 2, the brake disc 100 includes a disc body 10 and a plurality of fins 20.

The disc body 10 has a substantially annular plate shape. The disc body 10 includes a front surface 11 and a rear surface 12. The front surface 11 includes a sliding surface against which a brake lining (not shown in the drawing) is pushed. The rear surface 12 is a surface that faces in the direction opposite to the direction in which the front surface 11 faces. When the brake disc 100 is fastened to the rotary member, the rear surface 12 faces the rotary member. Hereinafter, for the sake of convenience of the description, there may be cases in which the radial direction and the circumferential direction of the disc body 10 are simply referred to as the radial direction and the circumferential direction. Further, the direction of the center axis of the disc body 10 is referred to as the thickness direction.

The plurality of fins 20 are provided on the rear surface 12 being one surface of the disc body 10. More specifically, the plurality of fins 20 are disposed on the rear surface 12 of the disc body 10 such that each fin 20 extends from the inner peripheral side toward the outer peripheral side of the disc body 10. Each fin 20 includes a top surface 21 and two side surfaces 221, 222. In each fin 20, the side surfaces 221, 222 are arranged in a substantially circumferential direction. The top surface 21 connects the side surfaces 221, 222 with each other. When the brake disc 100 is fastened to the rotary member, the top surfaces 21 come into contact with the rotary member. Thus, a space is formed between the rotary member, the disc body 10, and fins 20 adjacent to each other. The space forms an air passage through which air passes when the brake disc 100 rotates together with the rotary member.

Among the plurality of fins 20, each of one or more fins 20 includes a fastening hole 23. In the present embodiment, each of two or more fins 20 includes the fastening hole 23. Fastening members, such as bolts, are inserted into the fastening holes 23 when the brake disc 100 is fastened to the rotary member. Each fastening hole 23 penetrates, in the thickness direction, through the fin 20 to which the fastening hole 23 is provided and through the disc body 10. Each fastening hole 23 is disposed at the center portion in the radial direction of an annular sliding surface 11 (FIG. 2). Therefore, the brake disc 100 is fastened to the rotary member, such as a wheel, with the fastening members at positions around the center portion in the radial direction of the sliding surface 11.

In the example of the present embodiment, each fin 20 including the fastening hole 23 includes grooves 241, 242. In the example of the present embodiment, the fin 20 having no fastening hole 23 also includes the grooves 241, 242. The grooves 241, 242 have a shape recessed from the top surface 21 of the fin 20 toward the disc body 10. The grooves 241, 242 extend in the substantially circumferential direction to cross through the fin 20. In each fin 20, one groove 241 is disposed at a portion outward of the fastening hole 23 in the radial direction. In each fin 20, the other groove 242 is disposed at a portion inward of the fastening hole 23 in the radial direction. Accordingly, in the fin 20 having the fastening hole 23, the fastening hole 23 is positioned between the groove 241 and the groove 242.

The shape of the grooves 241, 242 is not particularly limited. For example, each of the wall surface and the bottom surface of the grooves 241, 242 may be a flat surface, a convex surface, or a concave surface. Each of the wall surface and the bottom surface of the grooves 241, 242 may be a combination of two or more kinds of surfaces.

In the present embodiment, each fin 20 includes a plurality of protruding ridge portions 25 provided to both side surfaces 221, 222 thereof. The plurality of protruding ridge portions 25 are arranged in a substantially radial direction (the longitudinal direction of the side surface 221) on one side surface 221 of each fin 20. The plurality of protruding ridge portions 25 are also arranged in the substantially radial direction (the longitudinal direction of the side surface 222) on the other side surface 222 of each fin 20. The protruding ridge portions 25 are provided in a pleated shape on each of the side surfaces 221, 222. The protruding ridge portions 25 are integrally formed with the side surfaces 221, 222.

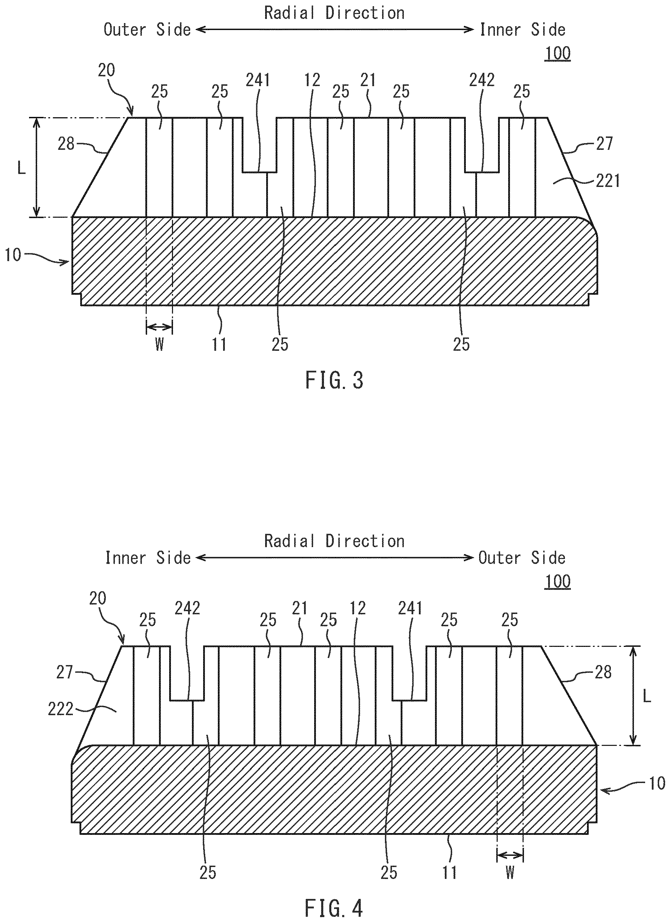

FIG. 3 is a III-III cross-sectional view of the brake disc 100 shown in FIG. 1. FIG. 4 is a IV-IV cross-sectional view of the brake disc 100 shown in FIG. 1. Hereinafter, the protruding ridge portion 25 will be described in more detail with reference to FIG. 3 and FIG. 4.

As shown in FIG. 3, on the one side surface 221 of the fin 20, each protruding ridge portion 25 extends between the disc body 10 and the top surface 21 of the fin 20. In the same manner, as shown in FIG. 4, on the other side surface 222 of the fin 20, each protruding ridge portion 25 extends between the disc body 10 and the top surface 21 of the fin 20. In the example of the present embodiment, each protruding ridge portion 25 extends in a substantially thickness direction of the disc body 10 as viewed from the side surface 221 side or the side surface 222 side of the fin 20. However, at least one of the protruding ridge portions 25 may be inclined relative to the thickness direction as viewed from the side surface 221 side and the side surface 222 side of the fin 20.

One end of each protruding ridge portion 25 is in contact with the rear surface 12 of the disc body 10. In the example shown in FIG. 3 and FIG. 4, the other end of each protruding ridge portion 25 reaches the top surface 21 of the fin 20. However, it is not always necessary for the other end of each protruding ridge portion 25 to reach the top surface 21 of the fin 20. That is, a length L (the length in the thickness direction) of each protruding ridge portion 25 may be set to be equal to or less than the height (the length in the thickness direction) of the fin 20 protruding from the rear surface 12 of the disc body 10. Each protruding ridge portion 25 may extend from the rear surface 12 of the disc body 10 to the vicinity of the top surface 21 of the fin 20 without reaching the top surface 21.

In the present embodiment, as shown in FIG. 3, the protruding ridge portions 25 are arranged at equal intervals over substantially the entire one side surface 221 of the fin 20. As shown in FIG. 4, the protruding ridge portions 25 are arranged at equal intervals over substantially the entire other side surface 222 of the fin 20. However, a method for arranging the protruding ridge portions 25 on the side surfaces 221, 222 of the fin 20 is not limited to the above. For example, on at least one of the side surfaces 221, 222 of the fin 20, the plurality of protruding ridge portions 25 may be arranged at unequal intervals. On at least one of the side surfaces 221, 222 of the fin 20, a region in which the protruding ridge portions 25 are disposed and a region in which no protruding ridge portions 25 are disposed may be provided. It is sufficient that the number of protruding ridge portions 25 on each of the side surfaces 221, 222 be two or more, and the number of protruding ridge portions 25 may be suitably determined. However, it is preferable that three or more protruding ridge portions 25 be provided to each of the side surfaces 221, 222.

In the present embodiment, the region on the one side surface 221 of the fin 20 in which the protruding ridge portions 25 are disposed corresponds to the region on the other side surface 222 of the fin 20 in which the protruding ridge portions 25 are disposed. That is, in the longitudinal direction (radial direction) of each fin 20, the positions at which the respective protruding ridge portions 25 are provided on the one side surface 221 substantially match the positions at which the respective protruding ridge portions 25 are provided on the other side surface 222. However, it is not always necessary for the region on the one side surface 221 of the fin 20 in which the protruding ridge portions 25 are disposed, to correspond to the region on the other side surface 222 of the fin 20 in which the protruding ridge portions 25 are disposed. For example, a configuration may be adopted in which the protruding ridge portions 25 are provided, on one of the side surfaces 221, 222, in a region closer to the inner peripheral side than the center of the fastening hole 23 (FIG. 1 and FIG. 2) and the protruding ridge portions 25 are provided, on the other of the side surfaces 221, 222, in a region closer to the outer peripheral side than the center of the fastening hole 23.

Each protruding ridge portion 25 protrudes in the substantially circumferential direction from the side surface 221 or the side surface 222. In the present embodiment, all of the protruding ridge portions 25 provided on the one side surface 221 of the fin 20 have substantially the same protruding amount. In the present embodiment, all of the protruding ridge portions 25 provided on the other side surface 222 of the fin 20 also have substantially the same protruding amount. The protruding amount of the protruding ridge portion 25 refers to the length of the protruding ridge portion 25 in the circumferential direction of the disc body 10.

The protruding amount of each protruding ridge portion 25 on each of the side surfaces 221, 222 of the fin 20 may be suitably determined. However, the protruding amount of each protruding ridge portion 25 is set to an amount that prevents the protruding ridge portions 25 of the fins 20 adjacent in the circumferential direction from interfering with each other. The protruding amount of the protruding ridge portion 25 may be determined by using the thickness of the fin 20 as a reference, for example. The thickness of each fin 20 refers to the length of the fin 20 in a direction substantially perpendicular to the longitudinal direction of the fin 20 (the radial direction of the disc body 10) and the height direction (the thickness direction of the disc body 10). For example, among the plurality of fins 20 provided to the disc body 10, when the thickness of the fin 20 having the smallest thickness is assumed as "T", the protruding amount of each protruding ridge portion 25 may be set to be 1/3 × T or more.

In the example of the present embodiment, all of the protruding ridge portions 25 on each of the side surfaces 221, 222 of the fin 20 have the same protruding amount. However, a configuration may be adopted in which the one side surface 221 of the fin 20 is divided into a plurality of regions in the radial direction, and the protruding amount of the protruding ridge portion 25 is changed for each region. For example, on the side surface 221 of the fin 20, the protruding ridge portion 25 in a region adjacent to the fastening hole 23 (FIG. 1 and FIG. 2) may have a relatively small protruding amount, and the protruding ridge portion 25 in regions inward and outward of such a region in the radial direction may have a relatively large protruding amount. Alternatively, contrary to the above, on the side surface 221 of the fin 20, the protruding ridge portion 25 in the region adjacent to the fastening hole 23 may have a relatively large protruding amount, and the protruding ridge portion 25 in the regions inward and outward of such a region in the radial direction may have a relatively small protruding amount.

In the same manner, a configuration may be adopted in which the other side surface 222 of the fin 20 is divided into a plurality of regions in the radial direction, and the protruding amount of the protruding ridge portion 25 is changed for each region. For example, on the side surface 222 of the fin 20, the protruding ridge portion 25 in a region adjacent to the fastening hole 23 may have a relatively small protruding amount, and the protruding ridge portion 25 in regions inward and outward of such a region in the radial direction may have a relatively large protruding amount. Alternatively, to the contrary to the above, on the side surface 222 of the fin 20, the protruding ridge portion 25 in the region adjacent to the fastening hole 23 may have a relatively large protruding amount, and the protruding ridge portion 25 in the regions inward and outward of such a region in the radial direction may have a relatively small protruding amount.

It is sufficient to suitably determine a width W (the length in the longitudinal direction of the side surface 221 or the side surface 222 of the fin 20) of each protruding ridge portion 25. On the one side surface 221 of the two side surfaces 221, 222 of the fin 20, all of the protruding ridge portions 25 may have the same width, or the protruding ridge portions 25 having different widths may be intermixed. In the same manner, on the other side surface 222, all of the protruding ridge portions 25 may have the same width, or the protruding ridge portions 25 having different widths may be intermixed.

Each protruding ridge portion 25 may have any of various shapes in transverse cross section. For example, each protruding ridge portion 25 may have a semi-circular shape, a semi-elliptical shape, a semi-oval track shape, or a polygonal shape, such as a triangular shape or a quadrangular shape, in transverse cross section. On the one side surface 221 of the two side surfaces 221, 222 of the fin 20, all of the protruding ridge portions 25 may have the same shape in transverse cross section, or the protruding ridge portions 25 having different shapes in transverse cross section may be intermixed. In the same manner, on the other side surface 222, all of the protruding ridge portions 25 may have the same shape in transverse cross section, or the protruding ridge portions 25 having different shapes in transverse cross section may be intermixed. The transverse cross section of the protruding ridge portion 25 refers to the cross section of the protruding ridge portion 25 taken along a plane substantially perpendicular to the extending direction of the protruding ridge portion 25.

Referring to FIG. 3 and FIG. 4, the sliding surface (the front surface 11 of the disc body 10) against which the brake lining is pushed is provided to only one side of the brake disc 100 according to the present embodiment in the thickness direction. On each of the side surfaces 221, 222 of the fin 20, the plurality of protruding ridge portions 25 are disposed between the inner peripheral end and the outer peripheral end of the annular sliding surface 11 (within a range of a sliding width). It is preferable that the plurality of protruding ridge portions 25 be disposed within the range of the top surface 21 of the fin 20 in the radial direction. The plurality of protruding ridge portions 25 are disposed outward of an inner peripheral surface 27 of the fin 20 in the radial direction. Further, the plurality of protruding ridge portions 25 are disposed inward of an outer peripheral surface 28 of the fin 20 in the radial direction. In each fin 20, the inner peripheral surface 27 is coupled to the inner end portions of both end portions of the top surface 21 and the side surfaces 221, 222 in the radial direction. In each fin 20, the outer peripheral surface 28 is coupled to the outer end portions of both end portions of the top surface 21 and the side surfaces 221, 222 in the radial direction. In the present embodiment, the outer peripheral surface 28 inclines relative to the thickness direction of the disc body 10 so that the height of the fin 20 is decreased toward the outside in the radial direction. The inner peripheral surface 27 may incline relative to the thickness direction of the disc body 10 so that the height of the fin 20 is increased toward the outside in the radial direction. The fin 20 has a substantially constant height within the range of the top surface 21 between the inner peripheral surface 27 and the outer peripheral surface 28.

### [Advantageous effect]

In the brake disc 100 according to the present embodiment, the plurality of protruding ridge portions 25 are provided to each of the plurality of fins 20 disposed on the rear surface 12 of the disc body 10. The plurality of protruding ridge portions 25 are provided to the side surfaces 221, 222 of each fin 20. When the brake disc 100 is fastened to the rotary member of a railway vehicle, so that the air passage is formed by the rotary member, the disc body 10, and the side surfaces 221, 222 of the fins 20 adjacent to each other, these protruding ridge portions 25 can reduce the cross-sectional area of the air passage in the circumferential direction. Thus, it is possible to restrict the flow rate of air that passes through the air passage (the flow rate of ventilation) during the travel of the railway vehicle. Hence, aerodynamic noise can be reduced.

In addition to the above, the protruding ridge portions 25 provided to the side surfaces 221, 222 of each fin 20 can also increase the surface area of the brake disc 100. Further, during the travel of the railway vehicle, air that flows into the air passage from the inner peripheral side of the disc body 10 flows along the side surfaces 221, 222 of each fin 20 and hence, the protruding ridge portions 25 provided to the side surfaces 221, 222 of each fin 20 can increase a coefficient of heat transfer between the brake disc 100 and air. As a result, it is possible to improve cooling performance of the brake disc 100 during braking. Accordingly, with the brake disc 100 according to the present embodiment, aerodynamic noise can be reduced by efficiently restricting the flow rate of ventilation in the air passage while cooling performance is ensured.

In the brake disc 100 according to the present embodiment, each of two or more fins 20 has the fastening hole 23 for inserting a fastening member. Each fin 20 having the fastening hole 23 includes the grooves 241, 242 that cross through the fin 20 itself. Further, each fin 20 having no fastening hole 23 also includes the grooves 241, 242. These grooves 241, 242 cause the pressure loss of air flowing through the air passage, thus decreasing the flow rate of ventilation in the air passage and raising a coefficient of heat transfer between the brake disc 100 and air. The grooves 241, 242 can also increase the surface area of each fin 20. Hence, by providing the grooves 241, 242 to each fin 20, aerodynamic noise can be further reduced, and cooling performance can be further improved.

The grooves 241, 242 are formed on the fin 20 including the fastening hole 23, thus allowing thermal expansion and contraction of the fin 20 in the radial direction. Hence, during braking of a railway vehicle, restraints on the fins 20 against thermal expansion are relaxed and hence, deformation of the brake disc 100 caused with the thermal expansion is reduced. As a result, a stress load on the fastening member inserted into the fastening hole 23 and on the brake disc 100 can be reduced and hence, it is possible to improve durability of the brake disc 100.

In the brake disc 100 according to the present embodiment, the plurality of protruding ridge portions 25 are disposed outward of the inner peripheral surface 27 of the fin 20 in the radial direction. In this case, it is possible to ensure, in each fin 20, corner portions formed between the inner peripheral surface 27 and the side surfaces 221, 222. With such corner portions, it is possible to efficiently cause air to enter the air passages each formed between the fins 20 adjacent to each other, and it is possible to maintain a high coefficient of local heat transfer in such a region. Hence, preferable cooling performance of the brake disc 100 can be maintained.

In the brake disc 100 according to the present embodiment, the outer peripheral surface 28 of each fin 20 inclines relative to the thickness direction of the disc body 10 so that the height of the fin 20 decreases toward the outside in the radial direction. The plurality of protruding ridge portions 25 are disposed inward of the outer peripheral surface 28 in the radial direction. Thus, during braking with the brake disc 100, when the brake disc 100 is deformed into an arch shape protruding toward the brake lining due to frictional heat generated between the brake lining and the sliding surface 11 of the disc body 10, it is possible to reduce the possibility of the outer peripheral side of each fin 20 and the protruding ridge portion 25 interfering with the rotary member, such as the wheel.

### <Second embodiment>

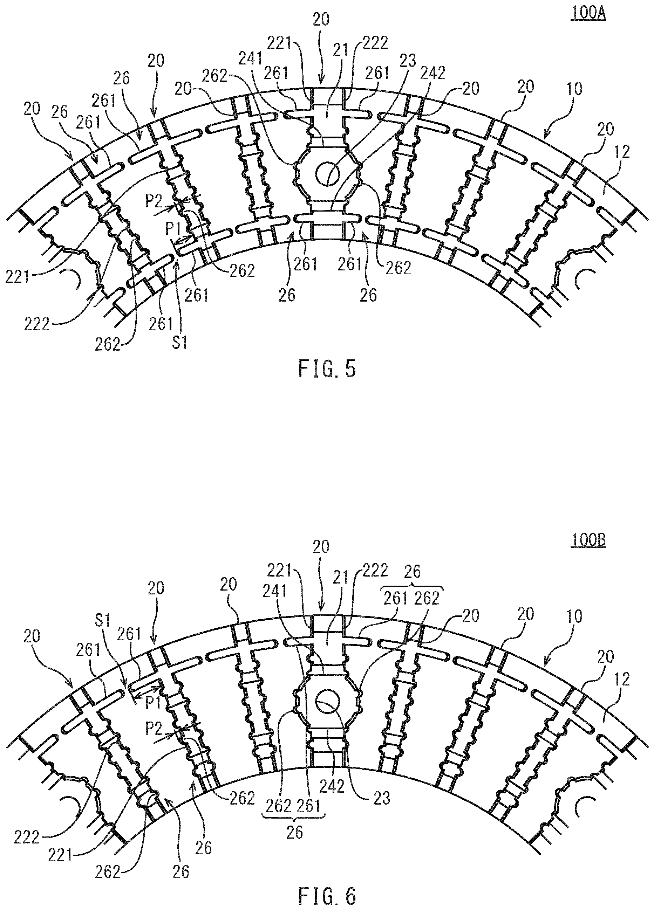

FIG. 5 is a back view of a brake disc 100A for a railway vehicle according to a second embodiment. FIG. 5 shows a portion of the brake disc 100A. The brake disc 100A according to the present embodiment is different from the brake disc 100 according to the first embodiment in the configuration of protruding ridge portions 26.

Referring to FIG. 5, each of the plurality of fins 20 includes a plurality of protruding ridge portions 26. The plurality of protruding ridge portions 26 are provided to both side surfaces 221, 222 of each fin 20. On each of the side surfaces 221, 222, the plurality of protruding ridge portions 26 include at least one first protruding ridge portion 261 and at least one second protruding ridge portion 262. In the present embodiment, a plurality of first protruding ridge portions 261 and a plurality of second protruding ridge portions 262 are provided on each of the side surfaces 221, 222. It is preferable that, on each of the side surfaces 221, 222, the number of protruding ridge portions 261, 262 be three or more in total.

The first protruding ridge portion 261 is disposed close to the inner peripheral side, and the first protruding ridge portion 261 is disposed close to the outer peripheral side of the disc body 10. That is, the first protruding ridge portion 261 is provided inward of the fastening hole 23 in the radial direction of the disc body 10, and the first protruding ridge portion 261 is provided outward of the fastening hole 23 in the radial direction of the disc body 10. The second protruding ridge portions 262 are disposed at positions different from the positions of the first protruding ridge portions 261 in the radial direction. In the example of the present embodiment, the plurality of second protruding ridge portions 262 are disposed between the first protruding ridge portion 261 disposed close to the inner peripheral side of the disc body 10 and the first protruding ridge portion 261 disposed close to the outer peripheral side of the disc body 10. These second protruding ridge portions 262 are arranged in the radial direction.

In the same manner as the protruding ridge portion 25 in the first embodiment, each of the protruding ridge portions 261, 262 extends between the disc body 10 and the top surface 21 of the fin 20. The protruding ridge portions 261, 262 protrude in the substantially circumferential direction of the disc body 10 from the side surface 221 or the side surface 222 of the fin 20. A protruding amount P1 of the first protruding ridge portion 261 is greater than a protruding amount P2 of the second protruding ridge portion 262. The protruding amount P1 refers to the length of the protruding ridge portion 261 in the circumferential direction, and the protruding amount P2 refers to the length of the protruding ridge portion 262 in the circumferential direction. The protruding amount P1 of the first protruding ridge portion 261 on each of the side surfaces 221, 222 of the fin 20 may be set to be equal to or more than 2.0 times the protruding amount P2 of the second protruding ridge portion 262, for example. In the same manner as the protruding ridge portion 25 in the first embodiment, among the plurality of fins 20, when the thickness of the fin 20 having the smallest thickness is assumed as "T", the protruding amount P2 of the second protruding ridge portion 262 may be set to be 1/3 × T or more.

The positions of the first protruding ridge portions 261 in the radial direction of the disc body 10 are substantially the same for all of the fins 20. Therefore, each first protruding ridge portion 261 of one fin 20 of the fins 20 adjacent to each other face each first protruding ridge portion 261 of the other fin 20 in the circumferential direction. The first protruding ridge portions 261 of the fins 20 adjacent to each other do not interfere with each other. That is, a gap S 1 is present between the first protruding ridge portions 261 that face each other in the circumferential direction. Among the plurality of fins 20, when the thickness of the fin 20 having the smallest thickness is assumed as "T", the size of the gap S1 in the circumferential direction may be set to be 0.7 × T or more and 5.0 × T or less.

In the present embodiment, the first protruding ridge portions 261 and the second protruding ridge portions 262 are provided to the side surfaces 221, 222 of each fin 20, and the protruding amount P1 of each first protruding ridge portion 261 is greater than the protruding amount P2 of each second protruding ridge portion 262. Thus, the cross-sectional area of each air passage can be reduced particularly at the positions of the first protruding ridge portions 261 and hence, it is possible to effectively restrict the flow rate of ventilation in the air passage. Hence, aerodynamic noise can be further reduced.

In the present embodiment, the first protruding ridge portions 261 having a relatively large protruding amount P1 are provided to the side surfaces 221, 222 of each fin 20. Thus, it is possible to further increase the surface area of the brake disc 100A. Therefore, it is possible to improve cooling performance of the brake disc 100A during braking.

Accordingly, also with the brake disc 100A according to the present embodiment, in the same manner as the first embodiment, aerodynamic noise can be reduced by efficiently restricting the flow rate of ventilation in the air passage while cooling performance is ensured.

### <Third embodiment>

FIG. 6 is a back view of a brake disc 100B for a railway vehicle according to a third embodiment. FIG. 6 shows a portion of the brake disc 100B. In the brake disc 100B according to the present embodiment, each fin 20 includes, on both side surfaces 221, 222 of the fin 20, protruding ridge portions 26 substantially the same as the protruding ridge portions 26 in the second embodiment. That is, the side surfaces 221, 222 of each fin 20 are provided with the first protruding ridge portions 261 having a relatively large protruding amount P1 and the second protruding ridge portions 262 having a relatively small protruding amount P2.

However, in the present embodiment, each first protruding ridge portion 261 is only disposed close to the outer peripheral side of the disc body 10. That is, the first protruding ridge portion 261 is only provided outward of the fastening hole 23 in the radial direction of the disc body 10. In the example shown in FIG. 6, of the first protruding ridge portion 261 and the plurality of second protruding ridge portions 262 provided on the side surface 221 or the side surface 222 of each fin 20, the first protruding ridge portion 261 is positioned on the outermost side in the radial direction.

Even with the configuration of the brake disc 100B according to the present embodiment, in the same manner as the above-mentioned respective embodiments, aerodynamic noise can be reduced by efficiently restricting the flow rate of ventilation in the air passage while cooling performance is ensured.

### <Fourth embodiment>

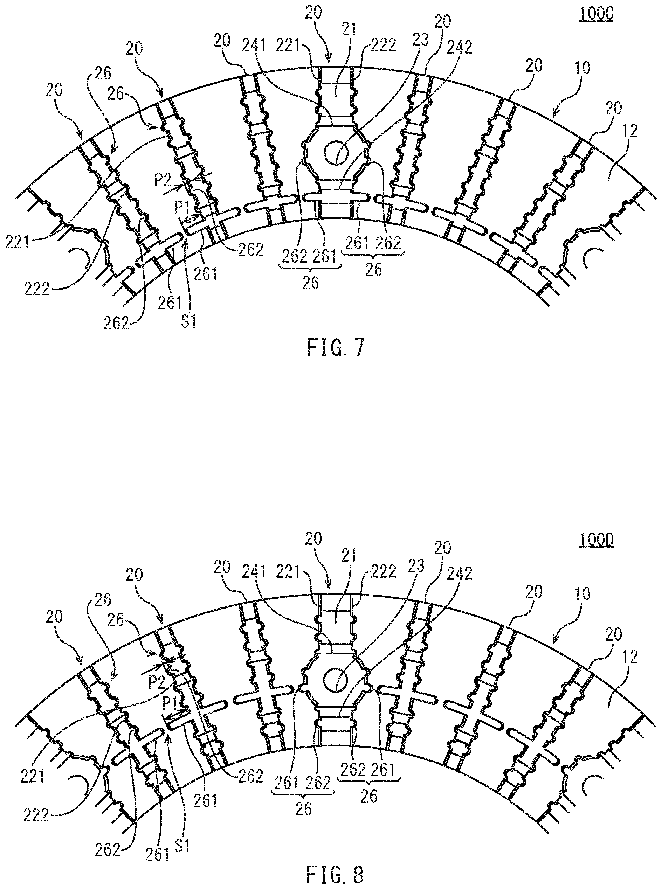

FIG. 7 is a back view of a brake disc 100C for a railway vehicle according to a fourth embodiment. FIG. 7 shows a portion of the brake disc 100C. In the brake disc 100C according to the present embodiment, each fin 20 includes, on both side surfaces 221, 222 of the fin 20, protruding ridge portions 26 substantially the same as the protruding ridge portions 26 in the second embodiment. That is, the side surfaces 221, 222 of each fin 20 are provided with the first protruding ridge portions 261 having a relatively large protruding amount P1 and the second protruding ridge portions 262 having a relatively small protruding amount P2.

However, in the present embodiment, each first protruding ridge portion 261 is only disposed close to the inner peripheral side of the disc body 10. That is, the first protruding ridge portion 261 is only provided inward of the fastening hole 23 in the radial direction of the disc body 10. In the example shown in FIG. 7, of the first protruding ridge portion 261 and the plurality of second protruding ridge portions 262 provided on the side surface 221 or the side surface 222 of each fin 20, the first protruding ridge portion 261 is positioned on the innermost side in the radial direction.

Even with the configuration of the brake disc 100C according to the present embodiment, in the same manner as the above-mentioned respective embodiments, aerodynamic noise can be reduced by efficiently restricting the flow rate of ventilation in the air passage while cooling performance is ensured.

In the present embodiment, each first protruding ridge portion 261 is disposed close to the inner peripheral side of the disc body 10. In this case, compared with the case in which each first protruding ridge portion 261 is disposed close to the outer peripheral side of the disc body 10, maintenance of the brake disc can be easily performed when dust or the like clogs up between the first protruding ridge portions 261 that face each other in the circumferential direction of the disc body 10. Further, the configuration in which each first protruding ridge portion 261 is disposed close to the inner peripheral side of the disc body 10 has an advantage in formability in shaping the brake disc 100C by forging.

### <Fifth embodiment>

FIG. 8 is a back view of a brake disc 100D for a railway vehicle according to a fifth embodiment. FIG. 8 shows a portion of the brake disc 100D. In the brake disc 100D according to the present embodiment, each fin 20 includes, on both side surfaces 221, 222 of the fin 20, protruding ridge portions 26 substantially the same as the protruding ridge portions 26 in the second embodiment. That is, the side surfaces 221, 222 of each fin 20 are provided with the first protruding ridge portions 261 having a relatively large protruding amount P1 and the second protruding ridge portions 262 having a relatively small protruding amount P2.

However, in the present embodiment, each first protruding ridge portion 261 is disposed at the center portion in the radial direction of the disc body 10. The first protruding ridge portion 261 is disposed at a position substantially or approximately the same as the position of the fastening hole 23 in the radial direction of the disc body 10, for example. The second protruding ridge portions 262 are disposed inward and outward of the first protruding ridge portion 261 in the radial direction. In the example shown in FIG. 8, on each of the side surfaces 221, 222 of the fin 20, the plurality of second protruding ridge portions 262 are provided inward of the first protruding ridge portion 261 in the radial direction. On each of the side surfaces 221, 222 of the fin 20, the plurality of second protruding ridge portions 262 are also provided outward of the first protruding ridge portion 261 in the radial direction.

Even with the configuration of the brake disc 100D according to the present embodiment, in the same manner as the above-mentioned respective embodiments, aerodynamic noise can be reduced by efficiently restricting the flow rate of ventilation in the air passage while cooling performance is ensured.

### <Sixth embodiment>

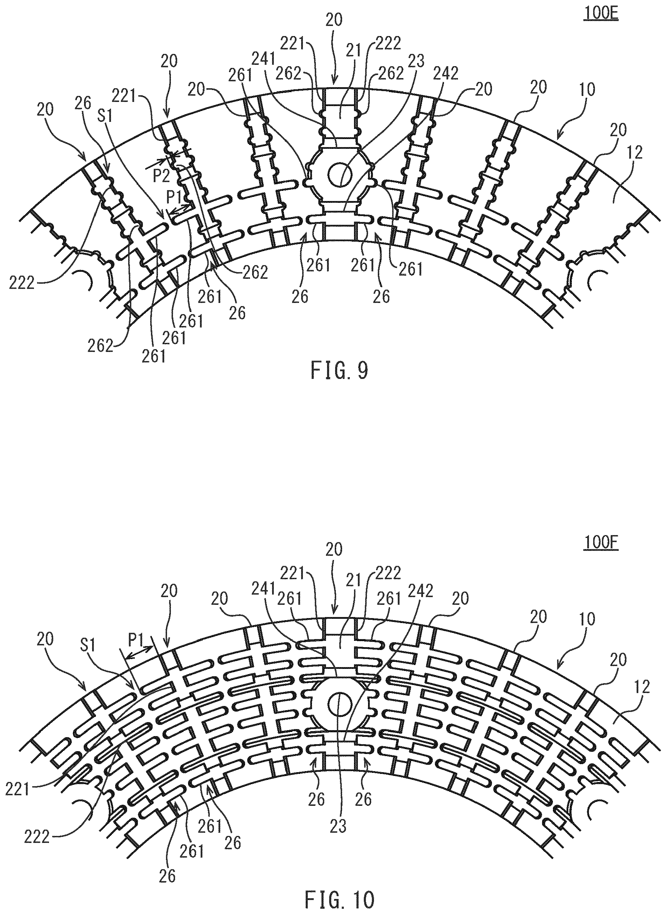

FIG. 9 is a back view of a brake disc 100E for a railway vehicle according to a sixth embodiment. FIG. 9 shows a portion of the brake disc 100E. In the brake disc 100E according to the present embodiment, each fin 20 includes, on both side surfaces 221, 222 of the fin 20, protruding ridge portions 26 substantially the same as the protruding ridge portions 26 in the second embodiment. That is, the side surfaces 221, 222 of each fin 20 are provided with the first protruding ridge portions 261 having a relatively large protruding amount P1 and the second protruding ridge portions 262 having a relatively small protruding amount P2.

In the present embodiment, in the same manner as the fourth embodiment, a first protruding ridge portion 261 is disposed close to the inner peripheral side of the disc body 10. In the present embodiment, in the same manner as the fifth embodiment, another first protruding ridge portion 261 is also disposed at the center portion in the radial direction of the disc body 10. In the example shown in FIG. 9, on each of the side surfaces 221, 222 of the fin 20, one second protruding ridge portion 262 is disposed between two first protruding ridge portions 261. On each of the side surfaces 221, 222 of the fin 20, the second protruding ridge portions 262 are also provided outward of the first protruding ridge portions 261 in the radial direction.

Even with the configuration of the brake disc 100E according to the present embodiment, in the same manner as the above-mentioned respective embodiments, aerodynamic noise can be reduced by efficiently restricting the flow rate of ventilation in the air passage while cooling performance is ensured.

In the present embodiment, on each of the side surfaces 221, 222 of each fin 20, the first protruding ridge portion 261 is disposed close to the inner peripheral side of the disc body 10, and another first protruding ridge portion 261 is disposed at the center portion in the radial direction. However, a configuration may be adopted in which, on each of the side surfaces 221, 222 of each fin 20, the first protruding ridge portion 261 is disposed close to the outer peripheral side of the disc body 10, and another first protruding ridge portion 261 is disposed at the center portion in the radial direction.

### <Seventh embodiment>

FIG. 10 is a back view of a brake disc 100F for a railway vehicle according to a seventh embodiment. FIG. 10 shows a portion of the brake disc 100F. In the brake disc 100F according to the present embodiment, the plurality of first protruding ridge portions 261 described above are provided to both side surfaces 221, 222 of each fin 20. In the present embodiment, second protruding ridge portions 262 are provided to neither the side surface 221 nor the side surface 222 of each fin 20. On the side surfaces 221, 222 of each fin 20, only the first protruding ridge portions 261 having a relatively large protruding amount P1 are arranged in the radial direction of the disc body 10.

Even with the brake disc 100F according to the present embodiment, in the same manner as the above-mentioned respective embodiments, aerodynamic noise can be reduced by efficiently restricting the flow rate of ventilation in the air passage while cooling performance is ensured.

### <Eighth embodiment>

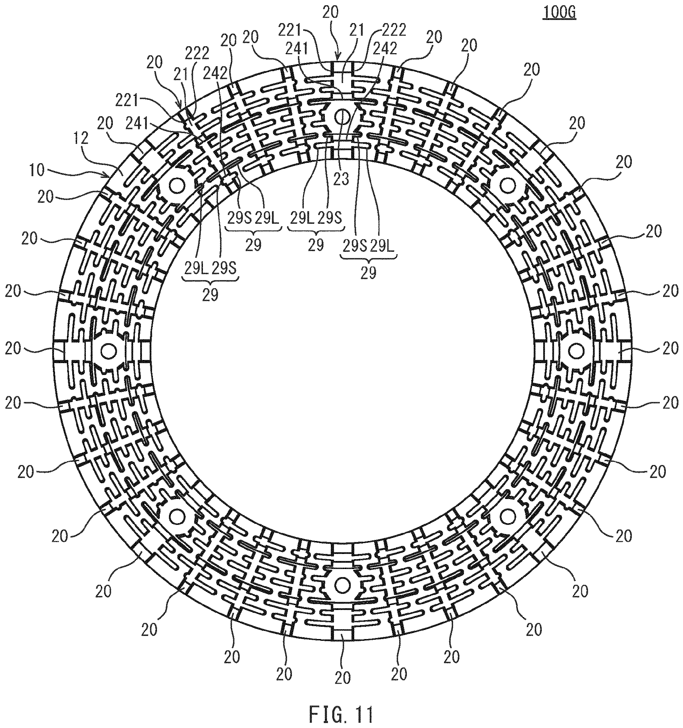

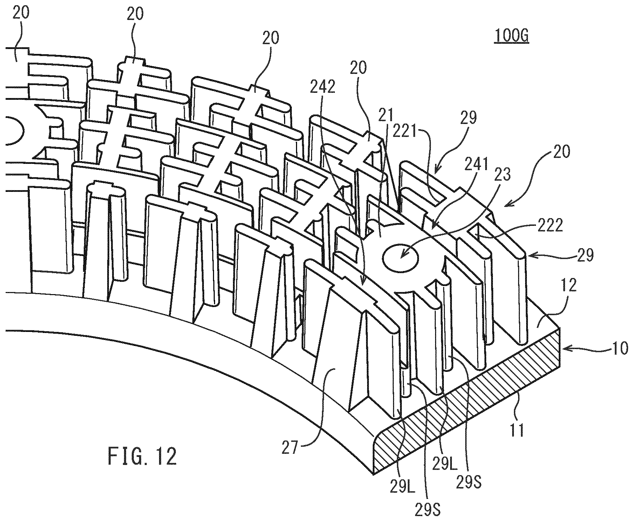

FIG. 11 is a back view of a brake disc 100G for a railway vehicle according to an eighth embodiment. FIG. 12 is a partial perspective view of the brake disc 100G shown in FIG. 11. As shown in FIG. 11 and FIG. 12, the brake disc 100G according to the present embodiment has a configuration substantially the same as the configuration of the brake disc 100 according to the first embodiment (FIG. 1 and FIG. 2). However, the brake disc 100G according to the present embodiment is different from the brake disc 100 according to the first embodiment in the configuration of protruding ridge portions 29.

In the same manner as the above-mentioned respective embodiments, each of fins 20 includes the plurality of protruding ridge portions 29. More specifically, the plurality of protruding ridge portions 29 are provided on one side surface 221 of each fin 20. The plurality of protruding ridge portions 29 are arranged in the substantially radial direction (the longitudinal direction of the side surface 221) on the side surface 221 of each fin 20. The plurality of protruding ridge portions 29 are also provided on the other side surface 222 of each fin 20. The plurality of protruding ridge portions 29 are arranged in the substantially radial direction (the longitudinal direction of the side surface 222) on the side surface 222 of each fin 20. The protruding ridge portions 29 are provided in a pleated shape on each of the side surfaces 221, 222. The protruding ridge portions 29 are integrally formed with the side surfaces 221, 222.

The plurality of protruding ridge portions 29 include a plurality of protruding ridge portions 29L and a plurality of protruding ridge portions 29S. Each of the protruding ridge portions 29L, 29S protrudes in the substantially circumferential direction from the side surface 221 or the side surface 222 of the fin 20. However, in each fin 20, the protruding amount of the protruding ridge portions 29L is greater than the protruding amount of the protruding ridge portions 29S. In each fin 20, the protruding ridge portions 29L having a relatively large protruding amount and the protruding ridge portions 29S having a relatively small protruding amount are intermixed. The protruding amount of the protruding ridge portion 29L refers to the length of the protruding ridge portion 29L in the circumferential direction of the disc body 10, and the protruding amount of the protruding ridge portion 29S refers to the length of the protruding ridge portion 29S in the circumferential direction of the disc body 10.

In the example of the present embodiment, on each of the side surfaces 221, 222 of the fin 20, the protruding ridge portion 29L having a relatively large protruding amount and the protruding ridge portion 29S having a relatively small protruding amount are alternately arranged. The protruding ridge portions 29L, 29S are arranged at equal intervals over the entire side surfaces 221, 222 of the fin 20, for example. However, on at least one of the side surfaces 221, 222 of the fin 20, the protruding ridge portions 29L, 29S may be arranged at unequal intervals.

Each of the protruding ridge portions 29L, 29S extends between the disc body 10 and the top surface 21 of the fin 20. Each of the protruding ridge portions 29L, 29S extends in a substantially thickness direction of the disc body 10, for example. However, the protruding ridge portions 29L, 29S may be inclined relative to the thickness direction as viewed in a side view of the fin 20.

In each fin 20, one end of each of the protruding ridge portions 29L, 29S is in contact with the rear surface 12 of the disc body 10. The other end of each of the protruding ridge portions 29L, 29S may reach the top surface 21 of the fin 20, or may not reach the top surface 21 of the fin 20. That is, the lengths of the protruding ridge portions 29L, 29S in the thickness direction of the disc body 10 may be set to be equal to or less than the distance from the rear surface 12 of the disc body 10 to the top surface 21 of the fin 20.

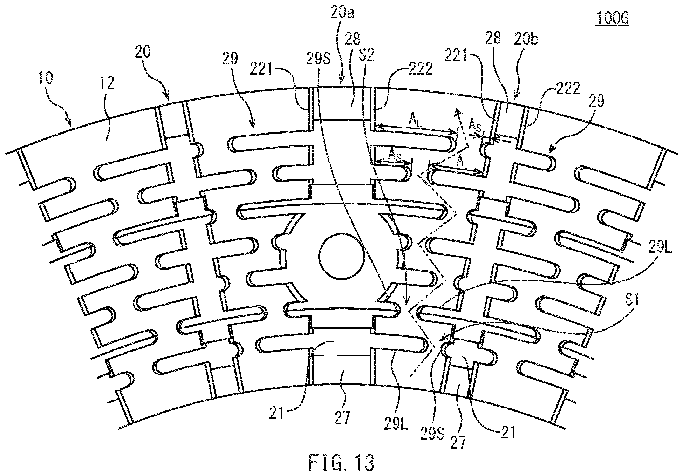

FIG. 13 is a partially enlarged view of the rear surface of the brake disc 100G. Hereinafter, the protruding ridge portions 29L, 29S will be described in more detail with reference to FIG. 13.

Referring to FIG. 13, among the plurality of fins 20, when two fins 20 adjacent to each other are assumed as fins 20a, 20b, the radial positions of the protruding ridge portions 29L, having a relatively large protruding amount, differ between the fin 20a and the fin 20b. In order to bend the air passage formed between the fins 20a, 20b, the protruding ridge portions 29L of the fin 20a are disposed at positions displaced in the radial direction from positions of the protruding ridge portions 29L of the fin 20b. That is, the protruding ridge portions 29L protruding from the side surface 222 of one fin 20a do not face the protruding ridge portions 29L protruding from the side surface 221 of the other fin 20b in the circumferential direction. Thus, as shown by a two-dot chain arrow in FIG. 13, a zig-zag shaped air passage is formed between the fins 20a, 20b adjacent to each other. This air passage has one or more positions that cause the flow of air to bend. It is preferable that the air passage have a plurality of positions that cause the flow of air to bend. To surely cause the flow of air to bend, it is preferable that the air passage have a shape in which an air outflow port cannot be visually recognized from an air inflow port.

A gap S1 is formed between the protruding ridge portion 29L of the fin 20a and the fin 20b. More specifically, the protruding ridge portion 29L of the fin 20a faces the protruding ridge portion 29S of the fin 20b in the circumferential direction with the gap S1 formed therebetween. In the same manner, a gap S2 is formed between the fin 20a and the protruding ridge portion 29L of the fin 20b. More specifically, the protruding ridge portion 29S of the fin 20a faces the protruding ridge portion 29L of the fin 20b in the circumferential direction with the gap S2 formed therebetween. The position of the gap S1 formed between the protruding ridge portion 29L of the fin 20a and the fin 20b is displaced in the circumferential direction from the position of the gap S2 formed between the protruding ridge portion 29L of the fin 20b and the fin 20a.

The sizes of the gaps S1, S2 in the circumferential direction may be determined by using the thickness of the fin 20 as a reference, for example. The thickness of the fin 20 refers to the length of the fin 20 in the direction substantially perpendicular to the radial direction and the thickness direction of the disc body 10. Among the plurality of fins 20 provided to the disc body 10, when the thickness of the fin 20 having the smallest thickness is assumed as "T", the sizes of the gaps S1, S2 in the circumferential direction may be set to be 0.7 × T or more and 5.0 × T or less. The size of the gap S1 is substantially equal to the size of the gap S2, for example. However, the size of the gap S1 may be different from the size of the gap S2.

The protruding ridge portion 29L has a protruding amount A_{L}, and the protruding ridge portion 29S has a protruding amount As. The protruding amounts A_{L}, As may also be determined by using the thickness of the fin 20 as a reference, for example. For example, among the plurality of fins 20, when the thickness of the fin 20 having the smallest thickness is assumed as "T", the protruding amount A_{L} of the protruding ridge portion 29L may be set to be 1.0 × T or more. The protruding amount A_{L} of the protruding ridge portion 29L is set to an amount that prevents the protruding ridge portion 29L from interfering with the protruding ridge portion 29S that faces the protruding ridge portion 29L in the circumferential direction. In each fin 20, the protruding amount As of the protruding ridge portion 29S is equal to or less than 0.85 times the protruding amount A_{L} of the protruding ridge portion 29L, for example.

The protruding end portions of the protruding ridge portions 29L, 29S have a semi-circular shape in transverse cross section, for example. However, the protruding end portions of the protruding ridge portions 29L, 29S may have a semi-elliptical shape or a polygonal shape, such as a triangular shape or a quadrangular shape, in transverse cross section, for example. On each of the side surfaces 221, 222 of the fin 20, all protruding end portions of the plurality of protruding ridge portions 29L, 29S may have the same shape in transverse cross section, or the protruding ridge portions 29L, 29S with protruding end portions having different shapes in transverse cross section may be intermixed. In the present embodiment, the transverse cross section refers to the cross section of the protruding ridge portion 29L or the protruding ridge portion 29S taken along a plane substantially perpendicular to the thickness direction of the disc body 10.

The width (the length in the longitudinal direction of the side surfaces 221, 222 of the fin 20) of each of the protruding ridge portions 29L, 29S may be suitably determined. On each of the side surfaces 221, 222 of the fin 20, all of the plurality of protruding ridge portions 29L, 29S may have the same width, or the protruding ridge portions 29L, 29S having different widths may be intermixed.

In the brake disc 100G according to the present embodiment, the plurality of protruding ridge portions 29 are provided to each of the plurality of fins 20 disposed on the rear surface 12 of the disc body 10. The plurality of protruding ridge portions 29 are provided to the side surfaces 221, 222 of each fin 20. When the brake disc 100G is fastened to the rotary member of a railway vehicle, so that an air passage is formed by the rotary member, the disc body 10, and the fins 20 adjacent to each other, these protruding ridge portions 29 can reduce the cross-sectional area of the air passage in the circumferential direction. Thus, it is possible to restrict the flow rate of air that passes through the air passage (the flow rate of ventilation) during the travel of the railway vehicle. Further, in the present embodiment, the plurality of protruding ridge portions 29 include the protruding ridge portions 29L, 29S. The positions of the protruding ridge portions 29L of the fins 20 adjacent to each other are displaced in the radial direction of the disc body 10, the protruding ridge portions 29L having a relatively large protruding amount A_{L}. As a result, the air passage formed between the fins 20 adjacent to each other is bent and hence, it is possible to increase flow resistance against air that passes through the air passage. Hence, aerodynamic noise can be reduced.

In the brake disc 100G according to the present embodiment, the protruding ridge portions 29L, 29S provided to the side surfaces 221, 222 of each fin 20 can also increase the surface area of the brake disc 100G. Further, during the travel of the railway vehicle, air that flows into the air passage from the inner peripheral side of the disc body 10 tends to flow along the side surfaces 221, 222 of each fin 20. Accordingly, by bending the air passage by the protruding ridge portions 29L on the side surfaces 221, 222 to increase the length of the passage, it is possible to cause air flowing through the air passage to sufficiently come into contact with the rear surface 12 of the disc body 10 and the side surfaces 221, 222 of each fin 20. Further, each bent portion of the air passage suddenly changes the direction of the flow of air and hence, it is possible to increase a coefficient of heat transfer between the brake disc 100G and air at the bent portion. As a result, it is possible to improve cooling performance of the brake disc 100G during braking. Accordingly, with the brake disc 100G according to the present embodiment, aerodynamic noise can be reduced by efficiently restricting the flow rate of ventilation in the air passage while cooling performance is ensured.

In the present embodiment, in the fins 20 adjacent to each other, the protruding ridge portion 29L having a relatively large protruding amount A_{L} faces the protruding ridge portion 29S having a relatively small protruding amount As with the gap S 1 or the gap S2 formed therebetween. In this case, the cross-sectional area of the air passage can be reduced particularly at the position at which the protruding ridge portion 29L faces the protruding ridge portion 29S and hence, it is possible to further increase a flow resistance against air that passes through the air passage. Hence, it is possible to effectively restrict the flow rate of ventilation in the air passage and hence, aerodynamic noise can be reduced.

Also in the present embodiment, on each of the side surfaces 221, 222 of the fin 20, the protruding ridge portions 29L, 29S are disposed between the inner peripheral end and the outer peripheral end of the annular sliding surface 11 (within a range of a sliding width). In the same manner as the above-mentioned respective embodiments, it is preferable that the protruding ridge portions 29L, 29S be disposed within the range of the top surface 21 of the fin 20 in the radial direction. The protruding ridge portions 29L, 29S are disposed outward of the inner peripheral surface 27 of the fin 20 in the radial direction, for example. Therefore, in the same manner as the above-mentioned respective embodiments, it is possible to efficiently cause air to enter the air passages each formed between the fins 20 adjacent to each other, and it is possible to maintain a high coefficient of local heat transfer in such a region. Hence, preferable cooling performance of the brake disc 100G can be maintained. Further, the protruding ridge portions 29L, 29S are disposed outward of the outer peripheral surface 28 of the fin 20 in the radial direction. Therefore, in the same manner as the above-mentioned respective embodiments, during braking with the brake disc 100G, it is possible to reduce the possibility of the outer peripheral side of each fin 20 and the protruding ridge portions 29L, 29S interfering with the rotary member, such as the wheel.

Although the embodiments according to the present disclosure have been described heretofore, the present disclosure is not limited to the above-mentioned embodiments, and various modifications are conceivable without departing from the gist of the present disclosure.

For example, in each of the brake discs 100, 100A to 100F according to the above-mentioned first to seventh embodiments, each of all of the fins 20 disposed on the rear surface 12 of the disc body 10 includes the plurality of protruding ridge portions 25 or the plurality of protruding ridge portions 26. However, a configuration may be adopted in which, among the plurality of fins 20 disposed on the rear surface 12 of the disc body 10, the plurality of protruding ridge portions 25 or the protruding ridge portions 26 are formed on only some fins 20. That is, it is sufficient that one or more of the plurality of fins 20 include the protruding ridge portions 25 or the protruding ridge portions 26. However, to obtain greater effects of reducing aerodynamic noise and of improving cooling performance, it is preferable that two or more of the plurality of fins 20 include the protruding ridge portions 25 or the protruding ridge portions 26, and it is more preferable that all of the fins 20 include the protruding ridge portions 25 or the protruding ridge portions 26.

In each of the brake discs 100, 100A to 100F according to the above-mentioned first to seventh embodiments, the protruding ridge portions 25 or the protruding ridge portions 26 are provided to both side surfaces 221, 222 of each fin 20. However, a configuration may be adopted in which the plurality of protruding ridge portions 25 or the plurality of protruding ridge portions 26 are formed on only one of the two side surfaces 221, 222 of each fin 20. Each of the brake discs 100, 100A to 100F may include, in an intermixed manner, two or more kinds of fins selected from the fin 20 including the protruding ridge portions 25 or the protruding ridge portions 26 that are provided to both side surfaces 221, 222, the fin 20 including the protruding ridge portions 25 or the protruding ridge portions 26 that are provided to only one of the side surfaces 221, 222, and the fin 20 including no protruding ridge portions 25, 26.

In the above-mentioned eighth embodiment, the protruding ridge portions 29L having a relatively large protruding amount A_{L} and the protruding ridge portions 29S having a relatively small protruding amount As are provided to the side surfaces 221, 222 of each fin 20. However, it is not always necessary for each fin 20 to include the protruding ridge portions 29S. For example, a configuration may be adopted in which only the protruding ridge portions 29L are provided to each of the fins 20 adjacent to each other. Alternatively, a configuration may be adopted in which the protruding ridge portions 29L, 29S are provided to one of the fins 20 adjacent to each other, and only the protruding ridge portions 29L are provided to the other of the fins 20 adjacent to each other. Even in such cases, in the same manner as the above-mentioned eighth embodiment, by displacing, in the radial direction of the disc body 10, the positions of the protruding ridge portions 29L of the fins 20 adjacent to each other, it is possible to bend the air passage formed between the fins 20 adjacent to each other. In the case in which the fin 20 includes no protruding ridge portions 29S on the side surface 221 or the side surface 222 thereof, two or more protruding ridge portions 29L are provided to the side surface 221 or the side surface 222. It is more preferable that three or more protruding ridge portions 29L be provided to the side surface 221 or the side surface 222.

In the above-mentioned eighth embodiment, each of all of the fins 20 disposed on the rear surface 12 of the disc body 10 includes the plurality of protruding ridge portions 29. However, a configuration may be adopted in which the plurality of protruding ridge portions 29 are formed on only some of the plurality of fins 20 disposed on the rear surface 12 of the disc body 10. That is, it is sufficient that, among the plurality of fins 20, at least two fins 20 adjacent to each other include the plurality of protruding ridge portions 29 including a protruding ridge portion 29L. However, to obtain greater effects of reducing aerodynamic noise and of improving cooling performance, it is preferable that three or more of the plurality of fins 20 include the protruding ridge portions 29, and it is more preferable that all of the fins 20 include the protruding ridge portions 29.

In the above-mentioned eighth embodiment, the protruding ridge portions 29L having a relatively large protruding amount A_{L} are disposed on each of the side surfaces 221, 222 of the fin 20 over substantially the entire region. However, the side surface 221 and/or the side surface 222 may have a region in which no protruding ridge portions 29L are disposed. For example, a configuration may be adopted in which, in the fins 20 adjacent to each other, the protruding ridge portions 29L are provided only in a region closer to the inner peripheral side than the center of the fastening hole 23, and the air passage is bent by the protruding ridge portions 29L only in this region closer to the inner peripheral side than the center of the fastening hole 23. For example, a configuration may be adopted in which, in the fins 20 adjacent to each other, the protruding ridge portions 29L are provided only in a region closer to the outer peripheral side than the center of the fastening hole 23, and the air passage is bent by the protruding ridge portions 29L only in this region closer to the outer peripheral side than the center of the fastening hole 23. Alternatively, a configuration may be adopted in which, in the fins 20 adjacent to each other, the protruding ridge portions 29L are provided only in a region in the vicinity of the fastening hole 23, and the air passage is bent by the protruding ridge portions 29L only at the center portion in the radial direction. In each fin 20, the protruding ridge portions 29S having a relatively small protruding amount As may be or may not be provided in a region in which the protruding ridge portions 29L are present and in a region in which no protruding ridge portions 29L are present. In the case in which each fin 20 includes both protruding ridge portions 29L, 29S, it is preferable that the number of protruding ridge portions 29L, 29S be three or more in total.

In each of the brake discs 100, 100A to 100G according to the above-mentioned respective embodiments, each fin 20 includes the grooves 241, 242. However, a configuration may be adopted in which each fin 20 includes only one of the grooves 241, 242. Alternatively, a configuration may be adopted in which each fin 20 includes neither the groove 241 nor the groove 242. Each of the brake discs 100, 100A to 100G may include the fins 20 including at least one of the grooves 241, 242 and the fins 20 including no grooves 241, 242 in an intermixed manner. For example, a configuration may be adopted in which, among the plurality of fins 20 disposed on the rear surface 12 of the disc body 10, only each of the fins 20 including the fastening hole 23 has at least one of the grooves 241, 242, and other fins 20 have no grooves 241, 242. Alternatively, a configuration may be adopted in which the fins 20 including the fastening hole 23 have no grooves 241, 242, and each of the other fins 20 has at least one of the grooves 241, 242. A configuration may also be adopted in which none of the fins 20 disposed on the rear surface 12 of the disc body 10 have the grooves 241, 242. In the case in which at least one of the grooves 241, 242 is provided to the fin 20 including no fastening hole 23, it is possible to freely dispose the groove 241 and/or the groove 242 at a position on the fin 20 in the radial direction without incurring any restriction from the fastening hole 23.

### EXAMPLES

Hereinafter, the present disclosure will be described in more detail with reference to examples. However, the present disclosure is not limited to the following examples.

### [First example]

In order to verify effects of the present disclosure, as an Example 1, a three-dimensional thermal fluid analysis was performed on a brake disc having a shape substantially the same as the shape of the brake disc 100 according to the above-mentioned first embodiment (FIG. 1 and FIG. 2) by using general-purpose thermal fluid analysis software (product name: ANSYS Fluent, made by ANSYS, Inc) assuming a case in which the railway vehicle is in steady travel at 330 km/h. Further, as an Example 2 to an Example 7, an analysis substantially the same as the above-mentioned analysis was performed on each of brake discs 100A to 100F according to the above-mentioned second to seventh embodiments (FIG. 5 to FIG. 10). As a Comparative Example, an analysis substantially the same as the above-mentioned analysis was performed on a brake disc obtained by removing protruding ridge portions on side surfaces of each fin from the brake disc according to the Example 1. Each of the brake discs according to the respective Examples and the Comparative Example includes thirty-three fins.

The level of aerodynamic noise and cooling performance of the brake discs according to the respective Examples and the Comparative Example were evaluated. For the evaluation procedure showing the level of aerodynamic noise, the flow rate of ventilation [kg/s] obtained by a gas isothermal flow analysis was used. This flow rate of ventilation is the flow rate of ventilation for one brake disc between a brake disc and a rotary member (wheel). As described above, in the brake disc for a railway vehicle, there is a strong correlation between the flow rate of ventilation in the air passages and the level of aerodynamic noise. Hence, it can be said that when the flow rate of ventilation is high, the level of aerodynamic noise is also high.

For the evaluation procedure showing cooling performance of the brake disc, a heat dissipation index [W/K] obtained by a gas non-isothermal flow analysis was used. This heat dissipation index is the integrated value for one brake disc of the average coefficient of heat transfer on the front surface of the disc and the surface area of the disc. A higher heat dissipation index indicates higher cooling performance of the brake disc.

For the evaluation procedure showing efficiency in reducing aerodynamic noise, heat dissipation efficiency was used. Heat dissipation efficiency is the value obtained by dividing the heat dissipation index by the flow rate of ventilation. A higher heat dissipation efficiency indicates that the flow rate of ventilation was restricted with less impairment of cooling performance of the brake disc, that is, aerodynamic noise was reduced more efficiently.

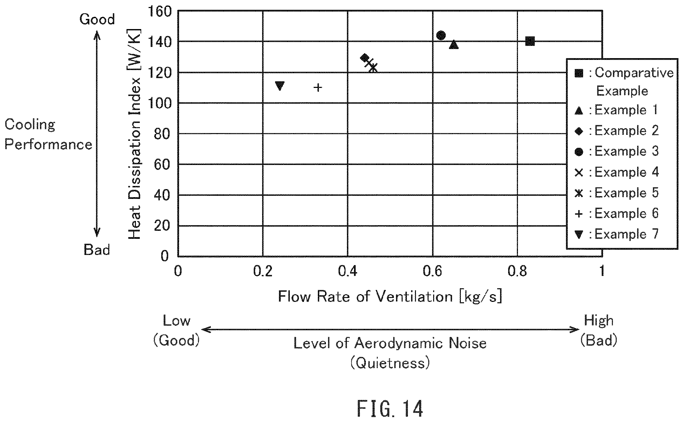

Evaluation results of the brake discs according to the respective Examples and the Comparative Example are shown in Table 1 and FIG. 14.

### [Table 1]

**TABLE 1**

| | Weight [kg] | Flow rate of ventilation [kg/s] | Heat dissipation index [W/K] | Heat dissipation efficiency (heat dissipation index/flow rate of ventilation) | Remarks |
|---|---|---|---|---|---|
| Comparative Example | 51.5 | 0.83 | 140.2 | 168.92 | |
| Example 1 | 52.7 | 0.65 | 138.1 | 212.46 | First embodiment (FIG. 1) |
| Example 2 | 54.8 | 0.44 | 129.3 | 293.86 | Second embodiment (FIG. 5) |
| Example 3 | 53.9 | 0.62 | 144.0 | 232.26 | Third embodiment (FIG. 6) |
| Example 4 | 53.6 | 0.45 | 126.1 | 280.22 | Fourth embodiment (FIG. 7) |
| Example 5 | 53.5 | 0.46 | 123.0 | 267.39 | Fifth embodiment (FIG. 8) |
| Example 6 | 54.4 | 0.33 | 110.1 | 333.64 | Sixth embodiment (FIG. 9) |
| Example 7 | 57.7 | 0.24 | 110.9 | 46208 | Seventh embodiment (FIG. 10) |

As shown in Table 1 and FIG. 14, it can be understood that a heat dissipation index is high, so that excellent cooling performance can be obtained in the Comparative Example. It can be also understood that, in the Example 1, a heat dissipation index is substantially equivalent to the heat dissipation index in the Comparative Example, so that excellent cooling performance can be obtained. In the Example 1, the flow rate of ventilation was decreased compared with the Comparative Example. That is, in the Example 1, the level of aerodynamic noise can be lowered while excellent cooling performance substantially equivalent to cooling performance in the Comparative Example is maintained. Also, when a comparison is made with respect to heat dissipation efficiency, heat dissipation efficiency in the Example 1 is significantly higher than heat dissipation efficiency in the Comparative Example. Hence, it can be said that, in the Example 1, aerodynamic noise was reduced more efficiently while cooling performance of the brake disc was ensured compared with the Comparative Example.

In the Example 2 to the Example 7 in which protruding ridge portions having a relatively large protruding amount are provided to both side surfaces of each fin, the flow rate of ventilation was decreased, so that the level of aerodynamic noise was lowered compared with the Comparative Example. Regarding the heat dissipation index, the heat dissipation index only in the Example 3 was higher than the heat dissipation index in the Comparative Example, and the heat dissipation indexes in the Example 2 and the Example 4 to the Example 7 were slightly lower than the heat dissipation index in the Comparative Example. However, in each of the Example 2 to the Example 7, heat dissipation efficiency was greatly improved compared with the Comparative Example. Hence, it can be said that, also in the Example 2 to the Example 7, aerodynamic noise was efficiently reduced while cooling performance of the brake disc was ensured.

It was confirmed by this analysis that, by providing the plurality of protruding ridge portions to the side surfaces of each fin, aerodynamic noise can be reduced while cooling performance of the brake disc for a railway vehicle is ensured.

### [Second example]

In order to verify effects of the present disclosure, as an Example 8, a three-dimensional thermal fluid analysis substantially the same as the three-dimensional thermal fluid analysis used in the first example was performed on a brake disc having a shape substantially the same as the shape of the brake disc 100G according to the above-mentioned eighth embodiment (FIG. 11 to FIG. 13). Evaluation results of the brake discs according to the Example 8 and the Comparative Example are shown in Table 2. The Comparative Example is the same as the Comparative Example in the first example.

### [Table 2]

**TABLE 2**

| | Weight [kg] | Flow rate of ventilation [kg/s] | Heat dissipation index [W/K] | Heat dissipation efficiency (heat dissipation index/flow rate of ventilation) | Remarks |
|---|---|---|---|---|---|
| Comparative Example | 51.5 | 0.83 | 140.2 | 168.92 | |
| Example 8 | 57.5 | 0.17 | 95.9 | 564.12 | Eighth embodiment (FIG. 13) |

As shown in Table 2, in the Example 8, the flow rate of ventilation was greatly decreased compared with the Comparative Example. In contrast, in the Example 8, the heat dissipation index was slightly lowered compared with the Comparative Example. However, heat dissipation efficiency in the Example 8 is remarkably higher than heat dissipation efficiency in the Comparative Example. Accordingly, it can be said that, in the Example 8, lowering of cooling performance of the brake disc was prevented in spite of a remarkable reduction in aerodynamic noise.

It was confirmed by this analysis that, by providing the plurality of protruding ridge portions to each of fins adjacent to each other in order to bend, by these protruding ridge portions, the air passage formed between the fins adjacent to each other, aerodynamic noise can be efficiently reduced while cooling performance of the brake disc for a railway vehicle is ensured.

### [Third example]

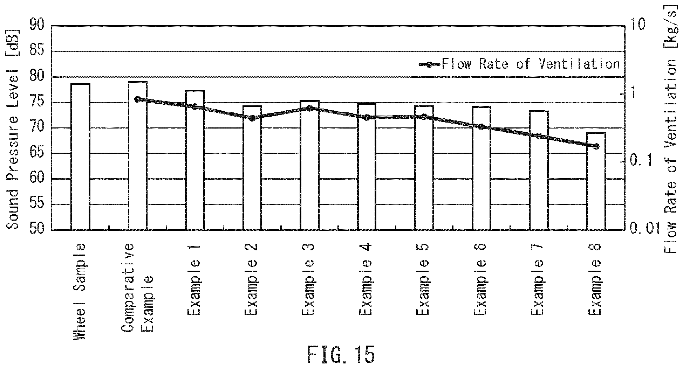

Models of the brake discs (disc samples) according to the above-mentioned Example 1 to Example 8 were prepared, and rotation tests that use the respective models were performed. In these tests, the disc samples of the example 1 to the example 8 were mounted on the models of the wheels (wheel samples), and were rotated at a predetermined rotational speed. Regarding each disc sample, sound pressure level was measured by a noise meter which is installed at a position 70 cm away from the front surface of the disc sample. For a comparison purpose, a rotation test substantially the same as the above-mentioned rotation test was also performed on a wheel sample on which a disc sample is not mounted and on the model of the brake disc (disc sample) according to the above-mentioned Comparative Example. Results of the rotation tests are shown in FIG. 15. FIG. 15 also shows the flow rate of ventilation obtained by the analysis in the above-mentioned first example and second example in addition to the sound pressure level measured by the rotation tests (the sum of noise components at frequencies from 2700 Hz to 3300 Hz for which there is no peak that is presumed to be derived from a testing machine).

As shown in FIG. 15, compared with the wheel sample and the Comparative Example in which each fin includes no protruding ridge portions, the sound pressure level was reduced in the Examples 1 to 8 in which the protruding ridge portions are provided to each fin. The sound pressure level was reduced particularly in the Example 8 in which each air passage formed between the fins adjacent to each other was bent. The trend of the sound pressure level obtained from this rotation test matches the trend of the flow rate of ventilation obtained from the analysis in the above-mentioned first example and second example. That is, it can be said that the relationship of magnitude of the flow rate of ventilation in the analysis corresponds to the relationship of magnitude of the sound pressure level and hence, the evaluation of an effect of reducing aerodynamic noise based on the analysis is correct.

It was confirmed by this rotation test that, by providing the plurality of protruding ridge portions to the side surfaces of each fin, the sound pressure level (aerodynamic noise) of the brake disc for a railway vehicle can be actually reduced. Aerodynamic noise was reduced particularly in the case in which the air passage formed between the fins adjacent to each other was bent by the protruding ridge portions.

### REFERENCE SIGNS LIST

100, 100A to 100G: brake disc
10: disc body
20, 20a, 20b: fin
21: top surface
221, 222: side surface
27: inner peripheral surface
23: fastening hole
241, 242: groove
25, 26, 261, 262, 29, 29L, 29S: protruding ridge portion
S1, S2: gap

## Claims

1. A brake disc for a railway vehicle, the brake disc comprising:
a disc body having an annular plate shape; and
a plurality of fins disposed on one surface of the disc body such that each of the fins extends from an inner peripheral side toward an outer peripheral side of the disc body, each of the fins including two side surfaces and a top surface, the two side surfaces being arranged in a circumferential direction of the disc body, the top surface connecting the two side surfaces with each other, wherein
among the plurality of fins, at least one fin includes
a plurality of protruding ridge portions arranged in a radial direction of the disc body on at least one side surface of the two side surfaces, each of the protruding ridge portions extending between the disc body and the top surface.

2. The brake disc according to claim 1, wherein
each of the plurality of fins further includes an inner peripheral surface coupled to inner end portions of the top surface and the two side surfaces in the radial direction, and
the plurality of protruding ridge portions are disposed outward of the inner peripheral surface in the radial direction.

3. The brake disc according to claim 1 or 2, wherein
in the at least one fin of the plurality of fins, the plurality of protruding ridge portions are provided to each of the two side surfaces.

4. The brake disc according to any one of claims 1 to 3, wherein
each of the plurality of fins includes the plurality of protruding ridge portions.

5. The brake disc according to any one of claims 1 to 4, wherein
the plurality of protruding ridge portions include at least one first protruding ridge portion and at least one second protruding ridge portion disposed at a position different from a position of the first protruding ridge portion in the radial direction, and
a length of the first protruding ridge portion in the circumferential direction is greater than a length of the second protruding ridge portion in the circumferential direction.

6. The brake disc according to claim 5, wherein
among the plurality of fins, each of fins adjacent to each other in the circumferential direction includes the first protruding ridge portion and the second protruding ridge portion, and
the first protruding ridge portion of one of the fins adjacent to each other faces, in the circumferential direction, the first protruding ridge portion of the other of the fins adjacent to each other.

7. The brake disc according to claim 5 or 6, wherein
the first protruding ridge portion is disposed close to the outer peripheral side of the disc body.

8. The brake disc according to any one of claims 5 to 7, wherein
the first protruding ridge portion is disposed close to the inner peripheral side of the disc body.

9. The brake disc according to any one of claims 5 to 8, wherein
the first protruding ridge portion is disposed at a center portion in the radial direction of the disc body.

10. The brake disc according to any one of claims 1 to 4, wherein
among the plurality of fins, each of fins adjacent to each other in the circumferential direction includes the plurality of protruding ridge portions,
the plurality of protruding ridge portions include at least one first protruding ridge portion, and
in order to bend an air passage formed between the fins adjacent to each other, the first protruding ridge portion of one of the fins adjacent to each other is disposed at a position displaced in the radial direction from a position of the first protruding ridge portion of the other of the fins adjacent to each other.

11. The brake disc according to claim 10, wherein
the plurality of protruding ridge portions further include
a second protruding ridge portion disposed at a position different from a position of the first protruding ridge portion in the radial direction, and
a length of the first protruding ridge portion in the circumferential direction is greater than a length of the second protruding ridge portion in the circumferential direction.

12. The brake disc according to claim 11, wherein
the first protruding ridge portion of one of the fins adjacent to each other faces, in the circumferential direction, the second protruding ridge portion of the other of the fins adjacent to each other, with a gap formed between the first protruding ridge portion and the second protruding ridge portion, and
the second protruding ridge portion of the one of the fins adjacent to each other faces, in the circumferential direction, the first protruding ridge portion of the other of the fins adjacent to each other, with a gap formed between the second protruding ridge portion and the first protruding ridge portion.

13. The brake disc according to any one of claims 1 to 12, wherein
among the plurality of fins, one or more fins include a groove that crosses through the fin.

14. The brake disc according to claim 13, wherein
among the plurality of fins, one or more fins include a fastening hole for inserting a fastening member, and
the groove is disposed, in the one or more fins including the fastening hole, at least at one of a portion outward of the fastening hole in the radial direction and a portion inward of the fastening hole in the radial direction.

15. The brake disc according to claim 14, wherein
the groove is disposed, in the one or more fins including the fastening hole, at each of the portion outward of the fastening hole in the radial direction and the portion inward of the fastening hole in the radial direction.
